(19) Europäisches Patentamt
European Patent Office
Office européen des brevets

(11) Numéro de publication: **0 037 341**
**A1**

(12) # DEMANDE DE BREVET EUROPEEN

(21) Numéro de dépôt: 81400503.9

(51) Int. Cl.$^3$: C 08 F 4/06

(22) Date de dépôt: 27.03.81

(30) Priorité: 27.03.80 FR 8006799

(43) Date de publication de la demande:
07.10.81 Bulletin 81/40

(84) Etats contractants désignés:
DE FR GB IT

(71) Demandeur: ETAT-FRANCAIS représenté par le
DELEGUE GENERAL POUR L'ARMEMENT
Bureau des Brevets et Inventions de la Délégation
Générale pour l'Armement 14, rue Saint-Dominique
F-75997 Paris Armées(FR)

(72) Inventeur: Collomb, Joelle, Marie-Louise
9 bis, rue Lavoisier
F-38100 Grenoble(FR)

(72) Inventeur: Gandoni, Alessandro
L'Espérance Le Boulloud d'Uriage
F-38410 St-Martin D'Uriage(FR)

(72) Inventeur: Cheradame, Hervé Marcel
12, rue Boileau
F-38700 La Tronche(FR)

(54) **Nouveaux catalyseurs de polymérisation cationique en phase homogène.**

(57) L'invention concerne de nouveaux catalyseurs de polymérisation cationique.

Ils sont constitués par des sels de métaux des colonnes II et III, et de la première période de transition de la classification périodique tels que le magnésium, l'aluminium, le gallium, le cobalt et le nickel, solubles dans le milieu réactionnel.

Application à la polymérisation en phase homogène de monomères oléfiniques et hétérocycliques.

EP 0 037 341 A1

Croydon Printing Company Ltd.

La présente invention concerne de nouveaux catalyseurs de polymérisation cationique et plus particulièrement de nouveaux catalyseurs constitués par des sels métalliques susceptibles de provoquer l'amorçage des polymérisations cationiques en phase homogène de monomères oléfiniques et hétérocycliques.

On sait que des monomères tels que l'isobutène, le styrène, les éthers vinyliques, les éthers ou sulfures cycliques, etc, peuvent subir une réaction de polymérisation cationique en présence de catalyseurs qui sont des acides de Brönsted libérant un proton que les monomères polymérisables cationiquement peuvent fixer, ou des acides de Lewis mettant en jeu une lacune de doublet électronique, soit par réaction directe avec la double liaison du monomère (amorçage direct), soit avec l'aide d'un acide de Brönsted (cocatalyse).

Les acides de Lewis actuellement connus sont des halogénures de métaux de transition tels que $TiCl_4$, $VCl_4$,$FeCl_3$, $SnCl_4$, etc, ou des éléments de la colonne III du tableau de la classification périodique tels que $BF_3$ ou $AlCl_3$. La combinaison d'un acide de Lewis et d'une substance cationogène comme les halogénures d'alkyle ou les halogènes eux-mêmes, peut provoquer l'amorçage des polymérisations cationiques par formation, au cours de la réaction primaire d'un carbocation ou d'un ion halonium, extrêmement réactif.

Il était communément admis que cette extrême réactivité était responsable de l'amorçage de la polymérisation cationique, ce qui écartait la possibilité de polymérisation dans le cas de cations plus stables, tels que les cations métalliques que l'on rencontre dans les sels métalliques.

L'utilisation de perchlorates métalliques comme catalyseurs de polymérisation cationique de l'isobutène est décrite dans le brevet français 2.067.711; il s'agit toutefois d'une polymérisation en phase hétérogène qui doit s'effectuer à une température de -12,5°C.

La présente invention a pour objet de nouveaux catalyseurs constitués par des sels métalliques, susceptibles de provoquer l'amorçage de polymérisations cationiques en phase homogène dans un solvant, ainsi qu'un procédé de polymérisation

cationique en phase homogène permettant d'obtenir des polymères de masse moléculaire élevée avec un excellent rendement dans un large domaine de températures.

Les catalyseurs de polymérisation cationique conformes à l'invention sont des sels de métaux appartenant aux colonnes II et III, ou à la première période de transition de la classification périodique des éléments, solubles dans le milieu réactionnel.

Plus particulièrement, les métaux utilisés conformément à l'invention sont ceux de la famille du beryllium, de l'aluminium et des métaux de transition, du scandium au zinc. A titre d'exemple de métaux utilisables on peut citer le beryllium, le magnésium,le calcium, le strontium, l'aluminium, le gallium, le manganèse, le cobalt, le nickel, le zinc, etc. Des exemples préférentiels de métaux sont le magnésium, l'aluminium, le gallium, le cobalt, le nickel, le cuivre, et le mercure.

A ces cations métalliques on associe un anion correspondant de préférence à un acide de Brönsted extrêmement fort, comme par exemple les anions perchlorate $ClO_4^-$, fluorosulfonate $FSO_3^-$, trifluorométhanesulfonate $CF_3SO_3^-$, hexafluoroantimoniate $SbF_6^-$, hexachloroantimoniate $SbCl_6^-$, hexafluorophosphate $PF_6^-$, hexafluoroarsenate $AsF_6^-$, tétrafluoroborate $BF_4^-$, etc.

Les sels métalliques utilisables dans l'invention peuvent être choisis librement à partir des exemples de cations et d'anions précités, la condition essentielle étant la possibilité de former des liaisons ioniques comme celles que l'on rencontre dans la chimie minérale traditionnelle. De plus,le sel métallique choisi doit être soluble dans le milieu réactionnel, mais cette solubilité peut être limitée. On obtient des résultats particulièrement avantageux en utilisant comme catalyseur le perchlorate de magnésium, le perchlorate d'aluminium, le perchlorate de cobalt, le perchlorate de nickel, le trifluorométhanesulfonate d'aluminium, et le trifluorométhanesulfonate de gallium.

La polymérisation s'effectue de préférence dans un solvant liquide dans les conditions de polymérisation, choisi

parmi ceux qui permettent des polymérisations cationiques avec un fort pouvoir solvatant. On peut citer à titre d'exemples le nitrométhane, le nitroéthane, le nitrobenzène, l'anhydride sulfureux, l'anhydride acétique, l'acétonitrile, l'anhydride de l'acide trifluorométhanesulfonique, etc. Ces solvants peuvent être utilisés isolément ou en combinaison, avec par exemple le chlorure de méthylène, le chlorure d'éthyle et de méthyle. Le cas échéant, le monomère à polymériser lui-même peut servir de solvant.

Conformément à la présente invention la réaction de polymérisation se déroule de façon homogène quant au catalyseur, choisi comme indiqué ci-dessus, à une température comprise entre la température de congélation du milieu et 60° C environ. La réaction d'amorçage de la polymérisation au moyen du catalyseur conforme à l'invention s'effectue de préférence à l'abri de l'eau et de l'humidité ; toutefois, certains catalyseurs conformes à l'invention peuvent supporter des milieux non rigoureusement désséchés.

Les catalyseurs et le procédé de polymérisation cationique en phase homogène suivant la présente invention s'appliquent à la polymérisation des oléfines et des hétérocycles.

Les monomères peuvent être choisis parmi les composés à double liaison carbone-carbone susceptibles de se polymériser cationiquement, et par exemple l'isobutène, le styrène, l'indène, un éther vinylique, le vinylcarbazole, ou parmi les composés hétérocycliques, et par exemple un époxyde, le dioxolane, un oxétane, le tétrahydrofuranne, un épisulfure, le 1,3,6 - trioxocane, le 6 - caprolactone, l'héxaméthylcyclotrisiloxane, la tertiobutylaziridine, le 3,3 - diméthylthiétane, etc, ou des dérivés substitués de ces composés.

Ces monomères peuvent être polymérisés conformément au procédé de l'invention avec un très bon rendement allant jusqu'à 100%, en un temps de réaction qui peut être compris entre quelques minutes et quelques heures selon les cas.

Les exemples donnés ci-après illustrent l'invention sans en limiter la portée. Tous les polymères obtenus ont été caractérisés par leur spectre infra-rouge et leur spectre de résonance magnétique nucléaire protonique.

EXEMPLE 1

On dissout $1.10^{-2}$ mole de perchlorate de magnésium anhydre dans 1 litre de nitrométhane sec. On introduit ensuite 6,9 moles d'isobutène sec à 20°C, et la polymérisation s'effectue en une dizaine de minutes. Après séparation, on récupère des oligomères du polyisobutène avec un rendement supérieur à 80%. Masse tonométrique $\overline{Mn}$=320. Les oligomères possèdent des insaturations oléfiniques terminales.

EXEMPLE 2

On dissout $1,37.10^{-3}$ mole de perchlorate de magnésium sec dans 1 litre d'un mélange soigneusement désséché équivolumique de chlorure de méthylène et de nitrométhane. On introduit ensuite dans le mélange 3,6 moles d'isobutène sec à -35°C. La réaction se déroule en quelques minutes avec un rendement voisin de 100%. Masse tonométrique $\overline{Mn}$=900 (insaturations oléfiniques terminales).

EXEMPLE 3

On dissout $5.10^{-3}$ mole de perchlorate de magnésium anhydre dans 1 litre de nitroéthane anhydre. Ensuite 3,8 moles d'isobutène sont introduites à -5°C. Après 1h30 de réaction, le rendement en oligomères du polyisobutène est d'environ 30%.

EXEMPLE 4

$10^{-3}$ mole de perchlorate de magnésium est dissoute dans 1 litre d'anhydride sulfureux $SO_2$ liquide à -25°C. Ensuite, 3,1 moles d'isobutène sont ajoutées à la température de -25°C. En quelques minutes le rendement en oligomères atteint 100%.

EXEMPLE 5

On dissout $2,7.10^{-3}$ mole de perchlorate de magnésium anhydre dans 1 litre de nitroéthane sec. Ensuite 1,41 moles de styrène sont ajoutées à -5°C. En 2 heures de réaction le rendement atteint 100%. Masse moléculaire viscosimétrique $\overline{Mv}$ = 40000.

EXEMPLE 6

On dissout $2,7.10^{-3}$ mole de perchlorate de magnésium anhydre dans 1 litre de nitroéthane sec. Ensuite 1,3 moles d'isobutylvinyléther sont introduites à la température de -3°C.

En quelques minutes le rendement atteint 100%.

EXEMPLE 7

On dissout $1,8.10^{-3}$ mole de perchlorate de magnésium anhydre dans 1 litre d'anhydride sulfureux $SO_2$ sec.Ensuite 5,3 moles de dioxolane sont introduites à la température de -30°C. En quelques dizaines de minutes le rendement atteint 100%.

EXEMPLE 8

On dissout $4.10^{-2}$ mole de perchlorate d'aluminium anhydre dans 14 moles de dioxolane; la polymérisation est exothermique, à température ambiante et conduit à un rendement total après 10 minutes.

EXEMPLE 9

On dissout $2,5.10^{-2}$ mole de trifluorométhanesulfonate d'aluminium anhydre dans 14 moles de dioxolane à température ambiante. La réaction est exothermique et conduit à un rendement de 100% après 10 minutes.

EXEMPLE 10

On dissout $4,35.10^{-3}$ mole de perchlorate d'aluminium dans 1 litre d'anhydride acétique; 1,78 moles de styrène sont introduites à température ambiante et le rendement atteint 68% en 1 heure environ. Masse tonométrique $\overline{Mn}$=5000.

EXEMPLE 11

On dissout $4,77.10^{-3}$ mole de trifluorométhanesulfonate d'aluminium dans 1 litre d'anhydride acétique, puis on ajoute 4,12 moles de styrène. Le rendement atteint 45% après 1 heure environ à température ordinaire.

EXEMPLE 12

On dissout $3,18.10^{-3}$ mole de trifluorométhanesulfonate d'aluminium dans 1 litre d'un mélange équimolaire anhydride acétique-chlorure de méthylène. 0,8 mole de styrène est alors introduite à température ambiante et donne un rendement de polymérisation de 48% après 1 heure.

EXEMPLE 13

On dissout $3,35.10^{-3}$ mole de trifluorométhanesulfonate d'aluminium dans 1 litre d'un mélange 5%-95% d'anhydride

acétique-chlorure de méthylène. 0,8 mole de styrène est alors ajoutée à température ambiante et cela conduit à un rendement de 78 % en 1 heure.

EXEMPLE 14

On dissout $4,0.10^{-3}$ mole de perchlorate de cobalt II dans 1 litre du mélange équivolumique anhydride acétique-chlorure de méthylène. 2 moles de styrène sont alors ajoutées à 0°C. Le rendement est de 100 % en polystyrène, en quelques minutes.

EXEMPLE 15

On dissout $4,0.10^{-3}$ mole de perchlorate de nickel II dans 1 litre de nitrométhane. On ajoute ensuite 2 moles d'isobutène à 25°C. La polymérisation est immédiate à 100 % de rendement et donne des oligomères de masse tonométrique $\overline{Mn}$=400.

EXEMPLE 16

On dissout $3,6.10^{-3}$ mole de trifluorométhanesulfonate de gallium dans 1 litre de nitrométhane. On ajoute alors 1,2 moles de styrène à température ambiante, et on obtient 100 % de polymérisation en 1 heure. Masse moléculaire moyenne $\overline{M}$=40000.

EXEMPLE 17

On dissout 0.4 mole de $SeBr_3^+ SbF_6^-$ séché sous vide dans 1 litre de nitrométhane et on ajoute sous vide 250 ml d'isobutène à 20°C. La polymérisation est très rapide et donne 100 % de rendement en quelques minutes. $\overline{Mn}$ tonométrique égale à 200.

EXEMPLE 18

On dissout 0.6 mole de $TeBr_3^+ A F_6^-$ séché sous vide dans 1 litre de nitrométhane et on ajoute à 20°C 250 ml d'isobutène. La polymérisation est très rapide. Ce rendement en oligomères est de 100 % en deux minutes.

EXEMPLE 19

On dissout sous vide 7 x $10^{-5}$ mole de trifluorométhane-sulfonate d'aluminium dans 1 ml de nitrométhane. On ajoute à 20°C 5 ml de 1,3,6 - trioxocane. En 10 minutes on obtient un polymère avec un rendement de 93 %.

EXEMPLE 20

On dissout sous vide 5 x $10^{-5}$ mole de trifluorométhane sulfonate d'aluminium dans 1 ml de nitrométhane. On ajoute ensuite à 20°C 3 ml de 6-caprolactone. Un léger échauffement et une augmentation de la viscosité indique l'amorçage de la polymérisation qui se poursuit pendant plusieurs jours jusqu'à donner un produit solide blanc. Rendement 100 %.

EXEMPLE 21

On dissout sous vide 8 x $10^{-5}$ mole de trifluorométhane-sulfonate d'aluminium dans 1 ml de nitrométhane. On ajoute ensuite 2 g de hexaméthylcyclotrisiloxane à 20°C. Le début de polymérisation se manifeste par un léger échauffement. Après 3 h on obtient un produit solide blanc avec rendement de 80 %. $\overline{Mp}$ = 610000,$\overline{Mn}$=240000 déterminés par GPC. On note l'absence quasi totale de faibles masses moléculaires.

EXEMPLE 22

On dissout 7 x $10^{-6}$ mole de trifluorométhane-sulfonate d'aluminium dans 20 ml de nitrométhane sec. On ajoute ensuite 1,4g de tert-butylazitidine à 20°C. Au bout de 3 heures on récupère 100 % de polymère de Mn supérieure à 10 000.

EXEMPLE 23

On dissout 6 x $10^{-6}$ mole de difluorométhane-sulfonate d'aluminium hexafluoroantimonate, $(CF_3SO_3)_2Al^+ SbF_6^-$, anhydre dans 10 ml de nitrométhane sec. On ajoute ensuite 1g de 3,3-diméthylthiéthane à 20°C. La polymérisation est lente et au bout de 8 heures on isole 80 % de polymère solide, blanc.

EXEMPLE 24

On dissout sous vide $7 \times 10^{-5}$ mole de trifluorométhane-sulfonate d'aluminium dans 1 ml de nitrométhane. On ajoute ensuite à 20°C 3 ml de 1,2-diméthoxyéthylène sec. La viscosité du milieu augmente lentement avec le temps en donnant au bout de quelques jours 95 % d'un polymère solide.

EXEMPLE 25

On dissout sous vide $4 \times 10^{-4}$ mole de perchlorate de cuivre II anhydre dans 1 ml de nitrométhane. L'addition de 4 ml d'isobutène à cette solution à 0°C provoque une polymérisation totale en quelques secondes avec chauffement. Le rendement en oligoisobutène est de 100%.

EXEMPLE 26

On dissout sous vide $4 \times 10^{-4}$ mole de perchlorate de mercure II anhydre dans 1 ml de nitrométhane. L'addition de 5 ml d'isobutène à-10°C provoque une polymérisation violente avec échauffement. Le rendement en oligo isobutène est quantitatif en moins d'une minute.

EXEMPLE 27

On dissout sous vide $2 \times 10^{-4}$ mole de perchlorate de mercure II anhydre dans 3 ml de 1,3 dioxolane à -30°C sous forte agitation. On laisse réchauffer à -10°C et la polymérisation devient très rapide pour donner en 2 minutes un polymère solide blanc.

EXEMPLE 28

On dissout sous vide $4 \times 10^{-6}$ mole de trifluorométhane-sulfonate d'aluminium dans 2 ml de 1,3-dioxolane à -30°C. On laisse la température remonter à -10°C et on observe le début de la polymérisation par une augmentation de la viscosité. On ajoute alors 3 ml de tétrahydrofuranne sec, sous agitation. La solution devient progressivement plus visqueuse et au bout de 20 jours elle est devenue solide. On obtient un copolymère ayant la formule approchée :

$$-(OCH_2CH_2OCH_2)_{4n}-(OCH_2-CH_2-CH_2-CH_2)_n-$$

REVENDICATIONS

1. Catalyseurs de polymérisation cationique en phase homogène de monomères oléfiniques et hétérocycliques dans un sólvant, caractérisés en ce qu'ils sont constitués par des sels de métaux appartenant aux colonnes II et III, ou à la première période de transition de la classification périodique des éléments, solubles dans le milieu réactionnel.

2. Catalyseur selon la revendication 1, caractérisé en ce que le métal est choisi parmi le magnésium, l'aluminium, le gallium, le cobalt et le nickel.

3. Catalyseur selon l'une quelconque des revendications 1 et 2 caractérisé en ce que l'anion associé au cation métallique est un anion correspondant à un acide fort.

4. Catalyseur selon la revendication 3, caractérisé en ce que l'anion est choisi parmi les anions perchlorate, fluorosulfonate, trifluorométhanesulfonate, hexafluoroantimoniate, hexachloroantimoniate, hexafluorophosphate, hexafluoroarsénate et tétrafluoroborate.

5. Catalyseur selon l'une quelconque des revendications 1 à 4, caractérisé en ce que le sel métallique est soluble dans le milieu réactionnel.

6. Catalyseur selon l'une quelconque des revendications 1 à 5, caractérisé en ce qu'il est appliqué à la polymérisation de l'isobutène, de l'indène, d'un éther vinylique, d'un époxyde, du vinylcarbazole, d'un épisulfure ou du tétrahydrofuranne.

7. Procédé de polymérisation cationique en phase homogène de monomères oléfiniques et hétérocycliques, caractérisé en ce que la réaction de polymérisation est amorcée par un sel métallique selon l'une quelconque des revendications 1 à 6.

8. Procédé de polymérisation cationique selon la revendication 7, caractérisé en ce que la réaction est effectuée dans un solvant choisi parmi le chlorure de méthylène, le chlorure d'éthyle, le chlorure de méthyle, le nitroéthane, le nitrobenzène, l'anhydride sulfureux, l'anhydride acétique, l'acétonitrile et l'anhydride de l'acide trifluorométhanesulfonique.

9. Procédé de polymérisation cationique selon la revendication 7, caractérisé en ce que le monomère oléfinique ou hétérocyclique sert de solvant.

10. Procédé de polymérisation cationique selon l'une quelconque des revendications 7 à 9, caractérisé en ce que la réaction de polymérisation s'effectue à une température comprise entre la température de congélation du milieu et 60°C.

0037341

Office européen des brevets

# RAPPORT DE RECHERCHE EUROPEENNE

Numéro de la demande

EP 81 40 0503

## DOCUMENTS CONSIDERES COMME PERTINENTS

| Catégorie | Citation du document avec indication, en cas de besoin, des parties pertinentes | Revendication concernée |
| --- | --- | --- |
| X | FR - A - 2 042 937 (MINNESOTA MINING)<br>* Revendications 1,2; page 2, ligne 5 - page 3, ligne 19; page 6, ligne 35 - page 7, ligne 9; page 7, ligne 30 - page 11, ligne 25 *<br>-- | 1-10 |
| X | FR - A - 2 038 085 (MINNESOTA MINING)<br>* Revendications 1,2,3; page 3, lignes 2-37; page 5, lignes 3-33; page 11, ligne 13 - page 12, ligne 7; page 13, ligne 1 - page 16, ligne 12 *<br>-- | 1-10 |
| X | FR - A - 2 034 953 (MINNESOTA MINING)<br>* Revendications 1,2,3; page 3, ligne 16 - page 8, ligne 4 *<br>-- | 1-10 |
| D | FR - A - 2 067 711 (PECHNINEY)<br>* Revendications 1,2,3 *<br>---- | 1-10 |

CLASSEMENT DE LA DEMANDE (Int. Cl.³)

C 08 F 4/06

DOMAINES TECHNIQUES RECHERCHES (Int. Cl.³)

C 08 F 4/00
4/06-
4/12
4/16
4/20
4/22
4/26

CATEGORIE DES DOCUMENTS CITES

X: particulièrement pertinent
A: arrière-plan technologique
O: divulgation non-écrite
P: document intercalaire
T: théorie ou principe à la base de l'invention
E: demande faisant interférence
D: document cité dans la demande
L: document cité pour d'autres raisons

&: membre de la même famille, document correspondant

X Le présent rapport de recherche a été établi pour toutes les revendications

| Lieu de la recherche | Date d'achèvement de la recherche | Examinateur |
| --- | --- | --- |
| La Haye | 01-07-1981 | PERMENTIER |